# EUROPÄISCHE PATENTSCHRIFT

(11) **EP 0 666 966 B1**
(45) Veröffentlichungstag und Bekanntmachung des Hinweises auf die Patenterteilung: **12.06.1996**
(21) Anmeldenummer: 93922947.2
(22) Anmeldetag: 13.10.1993
(51) Int. Cl.: F16C 19/40, F16C 19/20

(54) **RADIALWÄLZLAGER**
RADIAL ROLLING BEARING
ROULEMENT RADIAL

(30) Priorität: 31.10.1992 DE 4236847
(43) Veröffentlichungstag der Anmeldung: 16.08.1995
(73) Patentinhaber: INA Wälzlager Schaeffler KG, 91074 Herzogenaurach (DE)
(72) Erfinder: KAISER, Theodor, D-91315 Höchstadt an der Aisch (DE); LIPPERT, Roland, D-90768 Fürth (DE); HARTMANN, Cornelius, D-90429 Nürnberg (DE); KÖHLER, Horst-Dietmar, D-91074 Herzogenaurach (DE); MAYER, Ernst, D-91091 Grossenseebach (DE); SCHERB, Bruno, D-90556 Cadolzburg (DE)
(86) Internationale Anmeldenummer: EP9302817
(87) Internationale Veröffentlichungsnummer: WO9410470

(56) Entgegenhaltungen:
- EP-A- 0 164 968
- DE-A- 2 928 269
- DE-C- 499 378
- FR-A- 1 104 502
- FR-A- 1 215 359
- FR-A- 1 332 286
- FR-A- 2 066 603
- FR-A- 2 071 234
- FR-E- 86 757
- GB-A- 740 703
- GB-A- 1 172 015
- US-A- 3 058 789
- US-A- 3 517 975
- US-A- 4 277 117
- US-A- 4 896 974

## Beschreibung

Die Erfindung betrifft ein Radialwälzlager mit zwischen einem Innen- und einem Außenring abrollenden zylindrischen Wälzkörpern, wobei zwischen zwei jeweils einander benachbarten Wälzkörpern einzelne Distanzstücke eingefügt sind, die beidseitig ihrer Längsmittelebene Kontaktflächen aufweisen und bei Rotation des Radialwälzlagers mittels eines ihrer Endabschnitte an einer Laufbahn des Innen- oder Außenringes geführt sind.

Ein Wälzlager mit derartigen Distanzstücken wird in der EP-A-0164 968 beschrieben. Es weist einen inneren und einen dazu koaxialen äußeren Ring auf, die eine innere und eine äußere Laufbahn bilden und durch einen ringförmigen Spalt voneinander getrennt sind. Mehrere Wälzkörper liegen an den Laufbahnen an und sind abwechselnd mit keilförmigen Distanzstücken ringförmig in dem Spalt verteilt. Der Radius der Kontaktflächen des Distanzstückes ist dabei größer als der Radius der Wälzkörper. Dadurch entsteht zwischen Wälzkörper und Distanzstück ein keilförmiger Zwischenraum, der die Bildung eines Schmierfilmes in der Berührungslinie zwischen Wälzkörper und Distanzstück begünstigen soll.
Der Nachteil derartiger Distanzstücke besteht darin, daß sie die Wälzkörper an einem relativ großen Teil ihres Umfanges umschließen, so daß keine ausreichende Schmiermittelmenge zur Kühlung der Wälzkörper und der Laufbahnen zur Verfügung steht.

Darüberhinaus tritt durch die Formgebung der Distanzstücke eine erhöhte Reibung und somit Bremswirkung ein, da die Schubkraft der Wälzkörper im Bereich der schrägen Anlagefläche des Distanzstückes angreift und entsprechend dem Kräfteparallelogramm in eine Radialkraft F_{R} und eine senkrecht dazu wirkende Umfangskraft F_{U} zerlegt wird. Die der Umfangskraft F_{U} entgegengerichtete Bremskraft F_{B} ist aber vom Betrag der Radialkraft F_{R} und dem Gleitreibungskoeffizienten abhängig.

Derartige Distanzstücke neigen daher vor allem bei erhöhten Umfangsgeschwindigkeiten zum Verklemmen und sind auch wegen der auftretenden Schmierungsprobleme nur für Wälzlager mit niedrigen Umfangsgeschwindigkeiten geeignet.

Es ist daher Aufgabe der Erfindung, ein Distanzstück für ein Wälzlager zu schaffen, an dem eine geringere Reibung auftritt und das auch mit hohen Umfangsgeschwindigkeiten betrieben werden kann.

Erfindungsgemäß wird die Aufgabe dadurch gelöst, daß ein Abschnitt der Kontaktflächen, beidseitig eines Teilkreises des Radialwälzlagers, eine konvexe, konkave oder ebene Kontur aufweist und daß die Kontaktflächen mindestens eines Endabschnittes jedes Distanzstückes konkav gekrümmt sind mit einem Krümmungsradius, der größer ist als der Krümmungsradius der Wälzkörper, wobei bei konkaver Ausbildung des Abschnitts dessen Krümmungsradius größer als der Krümmungsradius der Kontaktflächen der Endabschnitte ist.

Durch diese Gestaltung der Distanzstücke wird erreicht, daß zwischen den Wälzkörpern und den Kontaktflächen der Distanzstücke eine nur tangentiale Berührung gewährleistet ist, die eine Schmiegung zwischen Wälzkörpern und Distanzstücken ausschließt. Durch diese fehlende Schmiegung zwischen Wälzkörper und Distanzstück ergibt sich eine wesentlich verbesserte Zutrittsmöglichkeit für das Schmiermittel zwischen Wälzkörper und Distanzstück und damit auch eine wesentlich verbesserte Kühlung für das Wälzlager. Die Schmiegung zwischen Distanzstücken und Wälzkörpern tritt auch dann nicht ein, wenn bei erhöhten Umlaufgeschwindigkeiten des Lagers die Distanzstücke aufgrund der Fliehkraft an der Außenlaufbahn geführt werden. Auch in diesem Fall liegen die Distanzstücke mit ihren konvexen, konkaven oder ebenen Bereichen an den Wälzkörpern an.

Bedingt durch diesen Bereich der Kontaktflächen ergibt sich im Gegensatz zu den bisher bekannten Distanzstücken ein veränderter Kraftangriffspunkt der Schubkraft F_{Sch}. Da diese immer senkrecht auf die Kontaktflächen der Distanzstücke auftrifft, ist die Schubkraft F_{Sch} gleich der Umfangskraft F_{U}, d. h. eine bremsende Wirkung der Distanzstücke kann in diesem Fall nicht eintreten, da die Bremskraft F_{B} eine radiale Komponente F_{R} der Schubkraft F_{Sch} voraussetzt. Diese Kräfteverhältnisse gelten auch dann, wenn das Distanzstück bei hohen Umlaufgeschwindigkeiten durch die Fliehkraft nach außen gegen die Außenlaufbahn gedrückt wird.

Weitere, erfindungsgemäße Ausgestaltungen sind Gegenstand der Unteransprüche und werden im folgenden näher beschrieben.

Sind die Distanzstücke zumindest an einem Endabschnitt mit einem Gleitschuh versehen, dessen der Laufbahn zugewandte Fläche gekrümmt ist, so ist Anspruch 2 zu entnehmen, daß dieser Gleitschuh als Ringsegment ausgebildet sein soll. Dieses Ringsegment ist vorzugsweise mit einem kleineren Krümmungsradius als die Laufbahn des Außenringes ausgebildet, so daß sich in Umfangsrichtung ein Schmiermittelkeil bilden kann. Der Gleitschuh kann aber auch eine pilzförmige Kontur haben, also an seinen sich in Richtung der Borde des Wälzlagers erstreckenden Abschnitten gekrümmt ausgebildet sein.

Nach Anspruch 3 ist vorgesehen, daß der von den Endabschnitten der Kontaktflächen eingeschlossene Bereich sowohl in Längs- als auch in Querrichtung eine konvexe Kontur aufweist. Bei einer derartigen kalottenförmigen Ausbildung der Kontaktflächen in ihrem Mittelteil ergibt sich eine punktförmige Berührung zwischen Wälzkörper und Distanzstück mit besonders günstigen Reibungsverhältnissen und besonders günstigen Zutrittsmöglichkeiten für Schmiermittel.

Nach einem weiteren Merkmal der Erfindung nach Anspruch 4 sind die dem Innen- und/oder Außenring benachbarten Endabschnitte der Kontaktflächen in ihrer Mitte mit Ausnehmungen versehen. Dadurch wird erreicht, daß die Abstützung des Distanzstückes in den Laufringen durch einen unterbrochenen Linienkontakt zwischen Distanzstück und Laufbahnen erfolgt, so daß deren Schmierung so wenig als möglich beeinträchtigt wird.

Aus Anspruch 5 geht hervor, daß die Distanzstücke eine Breite aufweisen, die geringer ist als die Breite der Laufbahnen bzw. der Wälzkörper. Auch hier wird durch einen verringerten Linienkontakt zwischen Distanzstück und Laufbahnen die Schmierung der Laufringe nur unwesentlich behindert.

Aus Anspruch 6 ist zu entnehmen, daß die dem Innen- und/oder Außenring benachbarten Endabschnitte der Kontaktflächen in ihren Randbereichen mit Ausnehmungen versehen sind. Dadurch ragen die Kontaktflächen einerseits zwischen die Borde in Richtung der Außenlaufbahn und greifen andererseits unter die Borde des Außenringes und benutzen diese als Führungsfläche. Auch dadurch ist eine axiale Halterung und eine radial notwendige Abstützung gegeben. Diese Ausführung hat den Vorteil, daß in bezug auf die Außenringlaufbahn vollkommen freier Schmiermitteldurchfluß möglich ist.

Aus Anspruch 7 geht hervor, daß im mittleren Bereich der Distanzstücke Wälzkörper eingeschnappt sind. Durch die Anordnung von beispielsweise Kugeln oder Zylinderrollen wird die Gleitreibung zwischen Distanzstücken und Wälzkörpern des Wälzlagers in eine Rollreibung überführt und somit die Reibleistung des Wälzlagers insgesamt vermindert.

Nach einem weiteren Merkmal der Erfindung nach Anspruch 8 soll der mittlere Bereich der Distanzstücke in seiner Mitte mit einer Ausnehmung versehen sein. Derartige Ausnehmungen der Distanzstücke im Bereich des Wälzkörperteilkreises ermöglichen die Schaffung eines größeren Fettraumes, einen verbesserten Durchtritt des Schmiermittels und somit eine Reduzierung der Verlustleistung durch Reibung im Wälzlager.

Nach Anspruch 9 sind die Distanzstücke aus Kunststoff, Keramik, Aluminium-oder Kupferlegierungen gefertigt.

Vorzugsweise kommt als Werkstoff für die Distanzstücke ein technischer Kunststoff in Betracht, wobei die Distanzstücke als Kunststoffspritz- oder-pressteil ausgebildet sind und dadurch sehr rationell und billig gefertigt werden können. Die Oberflächengüte eines gespritzten Kunststoffdistanzstückes entspricht durchaus den Anforderungen auch ohne eine Nachbearbeitung. Darüberhinaus weisen viele Kunststoffe, beispielsweise Polyamide, gute selbstschmierende Eigenschaften auf, so daß auch dann keine Schäden auftreten, wenn das Wälzlager kurzzeitig trocken läuft. Zur Verbesserung der Festigkeitseigenschaften können die Kunststoffe auch mit Glasfasern, Kohlenstoffasern oder anderen Faserstoffen verstärkt werden. Auch ist es möglich, daß Kunststoffe verwendet werden, in die ein Schmierstoff inkorporiert wurde.

Werden die Distanzstücke aus Keramikmaterial gefertigt, so sind als Vorteile eine hohe Temperaturbeständigkeit, gute Gleiteigenschaften sowie ein geringes spezifisches Gewicht zu nennen.

Aber auch die Fertigung der Distanzstücke aus Aluminium- und Kupferlegierungen, wie Messing und Bronze ist im Rahmen der Erfindung möglich. Derartige Distanzstücke lassen sich wirtschaftlich mittels Strangguß herstellen und auf eine entsprechende Länge ablängen. Metallische Distanzstücke weisen eine besondere Festigkeit auf.

Nach einem zusätzlichen Merkmal der Erfindung nach Anspruch 10 sollen die Distanzstücke aus Blech bestehen und an ihren den Wälzkörpern und den Laufbahnen des Außen- und Innenringes zugewandten Seiten mit einer Kunststoffgleitschicht, beispielsweise Permaglide, versehen sein.

Neben einer höheren Festigkeit gegenüber Distanzstücken aus Kunststoff ergibt sich als weiterer Vorteil, daß bei dieser Ausführungsvariante der konvexe Teil der Kontaktflächen federnd in Umfangsrichtung ausgeführt werden kann, so daß ein eventuell mögliches Klappergeräusch bei Aneinanderstoßen von Wälzkörper und Distanzstück vermieden werden kann.

Sind die Distanzstücke so geformt, daß sie im Bereich ihrer Endabschnitte Kontaktflächen mit einem Krümmungsradius haben, der größer als der Krümmungsradius der Wälzkörper ist, so sollen nach Anspruch 11 die dem Innen- und/oder Außenring benachbarten Endabschnitte der Kontaktflächen elastisch ausgebildet sein. Durch die elastische Ausbildung der Kontaktflächen kann ein erfindungsgemäßes Distanzstück in Umfangsrichtung zusammengepreßt werden und so bei der Montage zwischen den einzelnen Wälzkörpern eingeschoben werden.

Nach Anspruch 12 ist vorgesehen, daß die Kontaktflächen beiseitig der Längsmittelebene um einen Winkel versetzt zueinander angeordnet sind. Durch diese versetzte Anordnung der Kontaktflächen wird das erfindungsgemäße Distanzstück für Wälzlager einsetzbar, wo die Drehachsen der Wälzkörper abwechselnd gekreuzt zueinander verlaufen, d. h. für Kreuzrollenlager.

Schließlich sollen nach Anspruch 13 die mit den Laufbahnen in Berührung stehenden Endabschnitte der Kontaktfläche mit einer Anfasung versehen sein. Durch diese Abschrägung der Kanten wird ein Abstreifen des Schmiermittels von den Laufbahnen der Lagerringe vermieden.

Die Erfindung wird an nachstehenden Ausführungsbeispielen näher erläutert. Es zeigen:
- Figur 1: eine Vorderansicht eines erfindungsgemäßen Distanzstückes;
- Figur 2: eine Seitenansicht eines Distanzstückes;
- Figur 3: eine vergrößerte Einzelheit X aus Figur 1;
- Figur 4: einen Längsschnitt durch ein Zylinderrollenlager mit einem erfindungsgemäßen Distanzstück;
- Figur 5: einen Querschnitt durch ein Zylinderrollenlager mit einem Distanzstück entlang der Linie V-V in Figur 4;
- Figur 6: einen Längsschnitt durch ein Zylinderrollenlager mit einem erfindungsgemäßen Distanzstück, bei dem die den Lagerringen benachbarten Endbereiche der Kontaktflächen in ihren Mittelteilen Aussparungen aufweisen;
- Figur 7: einen Querschnitt durch ein Zylinderrollenlager entlang der Linie VII-VII in Figur 6;
- Figur 8: einen Längsschnitt durch ein Zylinderrollenlager mit einem erfindungsgemäßen Distanzstück, bei dem die den Lagerringen benachbarten Endbereiche der Kontaktflächen in ihren Randbereichen mit Aussparungen versehen sind;
- Figur 9: einen Querschnitt durch ein Zylinderrollenlager entlang der Linie IX-IX in Figur 8;
- Figur 10: einen Längsschnitt durch ein Zylinderrollenlager mit einem erfindungsgemäßen Distanzstück, bei dem an der dem Außenring zugewandten Seite ein Gleitschuh angeordnet ist;
- Figur 11: einen Querschnitt durch ein Zylinderrollenlager entlang der Linie XI-XI in Figur 10;
- Figur 12: eine Seitenansicht eines Distanzstückes, in dessen Bereich mit ebener, konvex oder konkav ausgebildeter Kontur Kugeln oder Zylinderrollen eingeschnappt sind;
- Figur 13: einen Schnitt durch ein Distanzstück entlang der Linie XIII-XIII in Figur 12;
- Figur 14: eine Seitenansicht eines Distanzstückes, in dessen Bereich mit ebener, konvex oder konkav ausgebildeter Kontur eine Ausnehmung vorhanden ist;
- Figur 15: einen Querschnitt durch ein erfindungsgemäßes Distanzstück, bei dem der mittlere Bereich sowohl in Quer- als auch in Längsrichtung eine konvexe Kontur aufweist;
- Figur 16: eine vergrößerte Einzelheit X aus Figur 15;
- Figur 17: eine Seitenansicht eines erfindungsgemäßen Distanzstückes, bei dem der mittlere Bereich sowohl in Querrichtung als auch in Längsrichtung eine konvexe Kontur aufweist;
- Figur 18: einen Längsschnitt durch ein Distanzstück entlang der Linie XVIII-XVIII in Figur 17;
- Figur 19: eine Vorderansicht eines erfindungsgemäßen Distanzstückes, bei dem die Kontaktflächen beidseitig der Teilungsebene um einen Winkel von 90° zueinander versetzt angeordnet sind;
- Figur 20: eine Seitenansicht eines Distanzstückes entlang der Linie XX-XX in Figur 19.

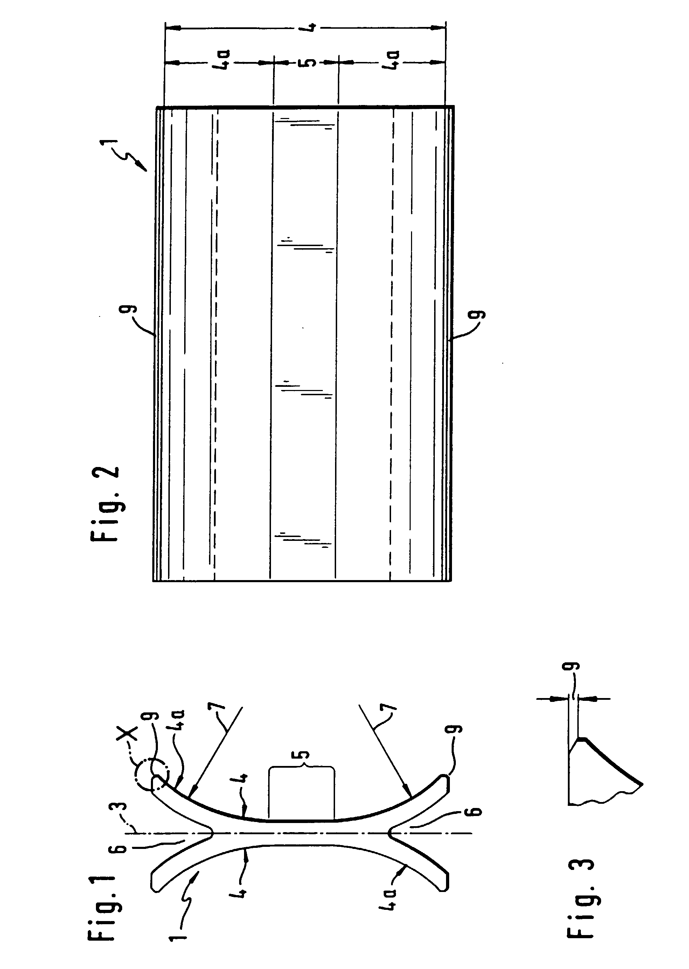

Das in Figur 1 und 2 dargestellte Distanzstück 1 wird vorzugsweise bei großen Lagern einzeln zwischen den Wälzkörpern angeordnet. Die Distanzstücke 1 haben die Aufgabe zu verhindern, daß die Wälzkörper direkt miteinander in Berührung kommen und aufgrund dessen verschleißen.

Ein derartiges Distanzstück 1 besteht nach den Figuren 1 und 2 aus an einer Längsmittelebene 3 gegenüberliegenden Kontaktflächen 4 zur Anlage der in den genannten Figuren nicht dargestellten Wälzkörper. Die beiden Kontaktflächen 4 sind im vorliegenden Beispiel ausgehend von ihrem Mittelpunkt zunächst eben ausgebildet und nehmen dann in radialer Richtung nach beiden Seiten einen konkaven Verlauf, wobei die Krümmungsradien 7 der Endabschnitte 4a größer als die Krümmungsradien der Wälzkörper sind. Der ebene Teil der Kontaktfläche 4 ist hierbei mit dem Bezugszeichen 5 versehen. Die symmetrisch einander gegenüberliegenden Kontaktflächen 4 des Distanzstückes 1 entfernen sich in Richtung des Innen- und Außenringes eines Wälzlagers aufgrund ihrer konkaven Ausbildung stetig voneinander, so daß zwischen beiden eine dreieckförmige Ausnehmung 6 entsteht, die sich in axialer Richtung über die gesamte Länge des Distanzstückes 1 erstreckt.

Aus Figur 2 ist erkennbar, daß das Distanzstück 1 von der Seite betrachtet eine rechteckige Form aufweist und an der Ober- und Unterkante seiner Längsseite mit einer Fase 9 versehen ist.

In Figur 3 ist diese Fase 9 der Einzelheit X aus Figur 1 vergrößert dargestellt. Diese Abschrägung der Kanten ist vorteilhaft, um an den Laufbahnen des Innen-oder Außenringes eine ungestörte Schmierfilmbildung zu fördern.

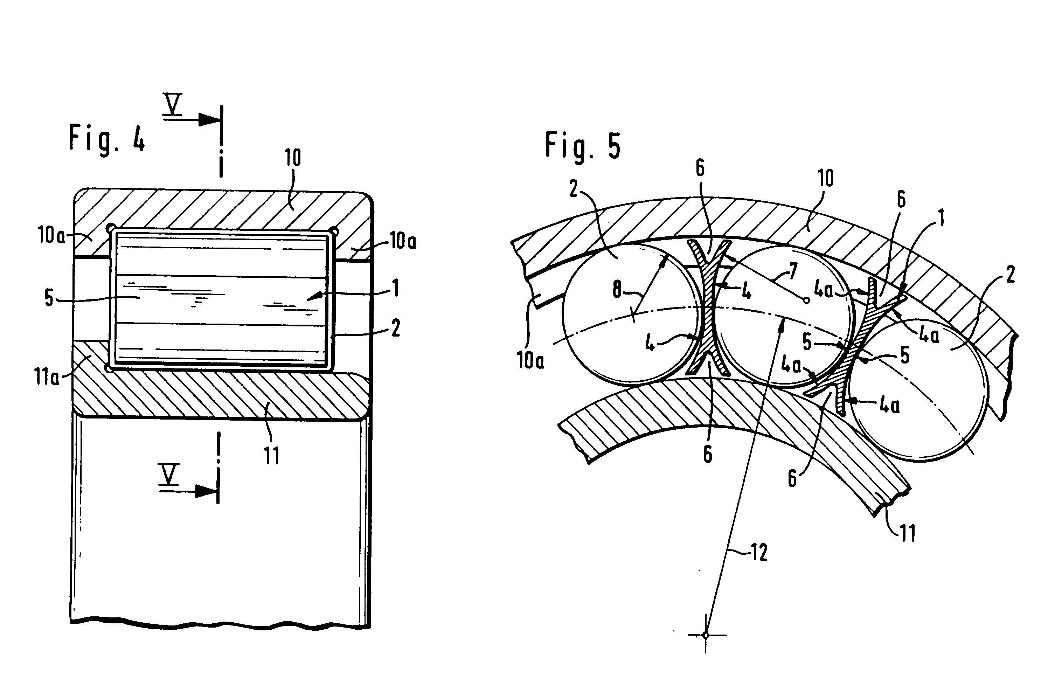

Das Zusammenspiel von Distanzstück 1 und Wälzkörper 2 innerhalb eines Wälzlagers ist den Figuren 4 und 5 zu entnehmen.

Wie aus Figur 4 ersichtlich, wird das Distanzstück 1 in radialer Richtung durch die Laufbahnen des Außen- 10 und Innenringes 11 und in axialer Richtung durch deren Borde 10a, 11a geführt. Im vorliegenden Beispiel sind die äußeren Abmessungen des Distanzstückes 1 so gewählt, daß es den gesamten Raum einnimmt, der von den Laufbahnen des Außen- 10 und Innenringes 11 sowie deren Borden 10, 11a begrenzt wird.

Aus Figur 5 ist die Anordnung von Distanzstücken 1 und Wälzkörpern 2 zueinander erkennbar. Dabei wechseln sich in Umfangsrichtung Wälzkörper 2 und Distanzstücke 1 miteiannder ab, d. h. in einem Wälzlager ist stets die gleiche Anzahl von Distanzstücken 1 und Wälzkörpern 2 vorhanden.

Wie Figur 5 weiter entnommen werden kann, wird das Distanzstück 1 einerseits durch die Laufbahnen des Außen- 10 und Innenringes 11 und andererseits durch die benachbart anliegenden Wälzkörper 2 geführt, so daß es sich nur in Umfangsrichtung verschieben kann und immer in einer stabilen Position gehalten wird. Bei erhöhter Drehzahl des Lagers hebt sich das Distanzstück 1 von der Laufbahn des Innenringes 11 ab und steht nur noch mit der Laufbahn des Außenringes 10 und den benachbarten Wälzkörpern 2 in Kontakt.

Die Krümmungsradien 7 der Endabschnitte 4a sind dabei größer als die Krümmungsradien 8 der Wälzkörper 2. Dadurch entsteht ein keilförmiger Spalt zwischen Wälzkörper 2 und dem Distanzstück 1 zur Aufnahme von Schmiermittel.

Durch die erfindungsgemäße konvexe, konkave oder ebene Kontur des Abschnitts 5 der Kontaktfläche 4 innerhalb und außerhalb des Teilkreises 12 der Wälzkörper 2 wird die bisherige Schmiegung zwischen Distanzstück 1 und Wälzkörper 2 verringert, so daß einerseits ein Zutritt des Schmiermittels verbessert möglich ist und andererseits durch einen genauen definierten Kraftangriffspunkt der Wälzkörper 2 innerhalb des Teiles 5 der Kontaktfläche 4 in Umfangsrichtung auf die Distanzstücke 1 deren bremsende Wirkung und somit ein Verklemmen verhindert wird.

Die sich in Laufbahnnähe des Außen- 10 und Innenringes 11 befindlichen, durch die dreieckförmige Ausnehmung 6 getrennten Endabschnitte 4a der Kontaktflächen 4 können elastisch ausgeführt sein, so daß das letzte Distanzstück 1 unter elastischer Verformung in die Lücke zwischen den beiden zuletzt eingesetzten Wälzkörpern 2 eingedrückt werden kann. Bei Lagern mit Anlaufscheiben anstelle von Borden ist eine axiale Montage auch mit starren Endabschnitten 4a der Kontaktflächen 4 möglich.

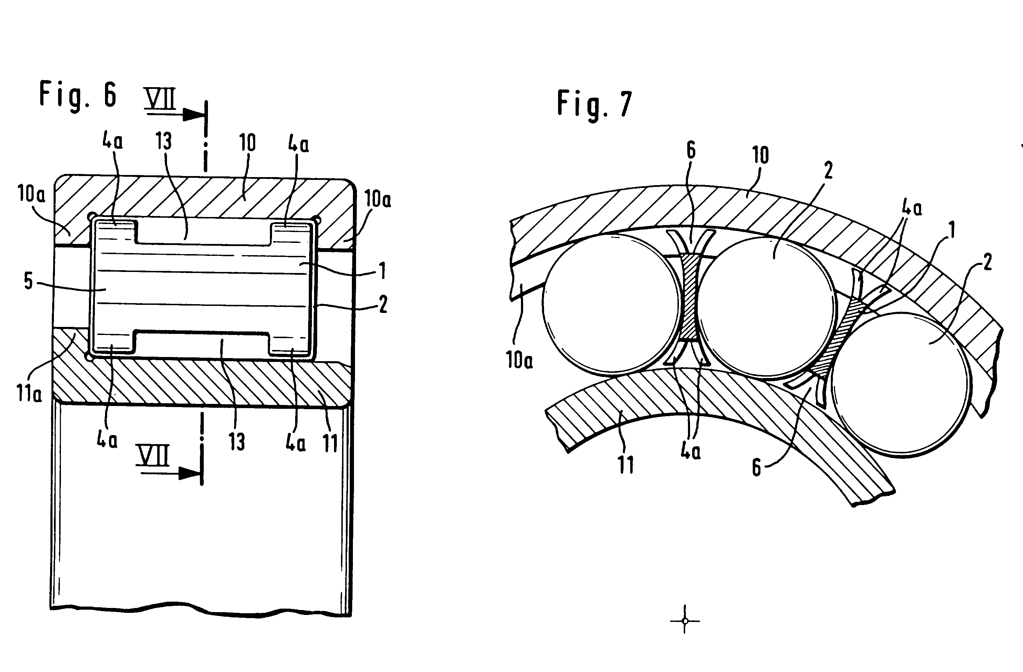

Das in Figur 6 und 7 darstellte Wälzlager unterscheidet sich von dem in Figur 4 und 5 dargestellten nur durch eine unterschiedliche Ausbildung des Distanzstückes 1. Aus diesem Grunde sind hier, wie auch bei allen nachfolgenden Figuren die gleichen Bezugszeichen verwendet worden.

Das Distanzstück 1 zeichnet sich dadurch aus, daß der Endabschnitt 4a der Kontaktflächen 4 in Nähe der Laufbahnen des Außen- 10 und Innenringes 11 in seiner Mitte mit Ausnehmungen 13 versehen ist.

Dadurch erfolgt zwischen dem Distanzstück 1 und den Laufbahnen des Außen-10 und Innenringes 11 eine unterbrochene Linienberührung in axialer Richtung, so daß der Schmierfilm an den Laufbahnen des Außen- 10 und Innenringes 11 in seiner Ausbildung nicht behindert ist, d. h. die Ausnehmung 13 erlaubt einen vollkommen ungehinderten Durchtritt des Schmiermittels.

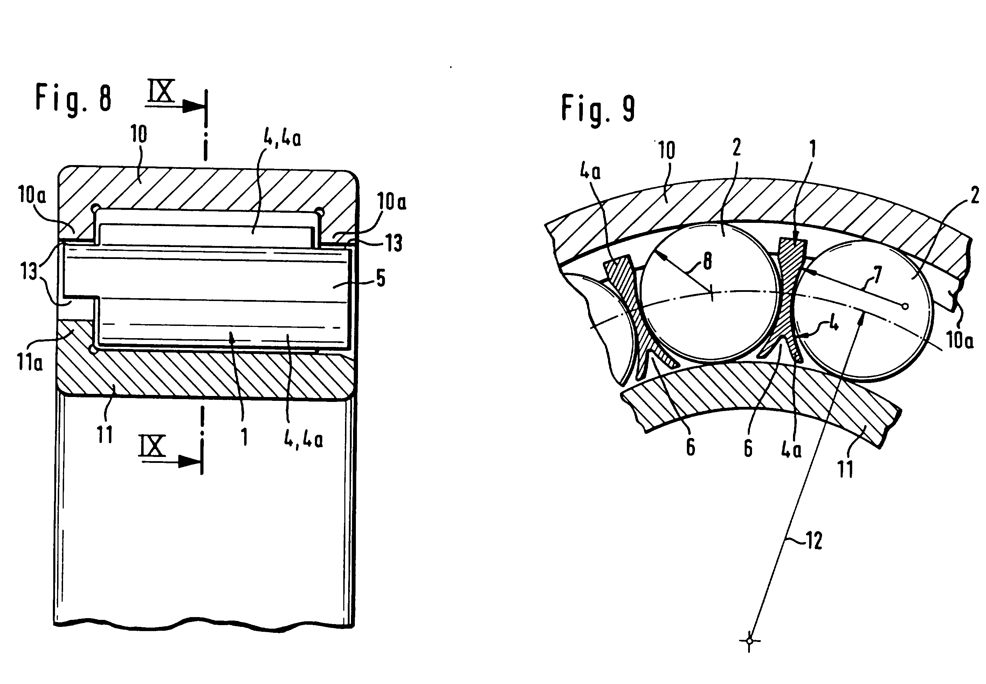

Das in den Figuren 8 und 9 dargestellte Distanzstück 1 reicht in seiner axialen Ausdehnung nahezu bis an die Stirnseiten der Borde 10a, 11a und ist an seinen äußeren Enden im Randbereich mit Ausnehmungen 13 versehen. Dabei weist es an der dem Außenring 10 zugewandten Seite rechts- und linksseitig je eine Ausnehmung 13 auf, während an der gegenüberliegenden Seite wegen des Bordes 11a nur linksseitig eine Ausnehmung 13 vorhanden ist.

Die radiale und axiale Führung des Distanzstückes 1 erfolgt dabei durch die Laufbahn des inneren Laufringes 11 und die Borde 10a, 11a. Bei erhöhten Drehzahlen des Lagers wird unter Einfluß der Fliehkraft die radiale und axiale Führung des Distanzstückes 1 ausschließlich von den Borden 10a, 11a übernommen.

Wie aus Figur 9 weiter erkennbar, ist die Kontaktfläche 4 des Distanzstückes 1 über ihren gesamten Bereich konkav ausgebildet. Zunächst weist sie ausgehend von ihren Endabschnitten 4a einen Krümmungsradius 7 auf, der größer als der Krümmungsradius 8 der Wälzkörper 2 ist und geht in ihrem Mittelteil 5 in einen nicht dargestellten Krümmungsradius über, der wesentlich größer als der Krümmungsradius der Wälzkörper 2 ist.

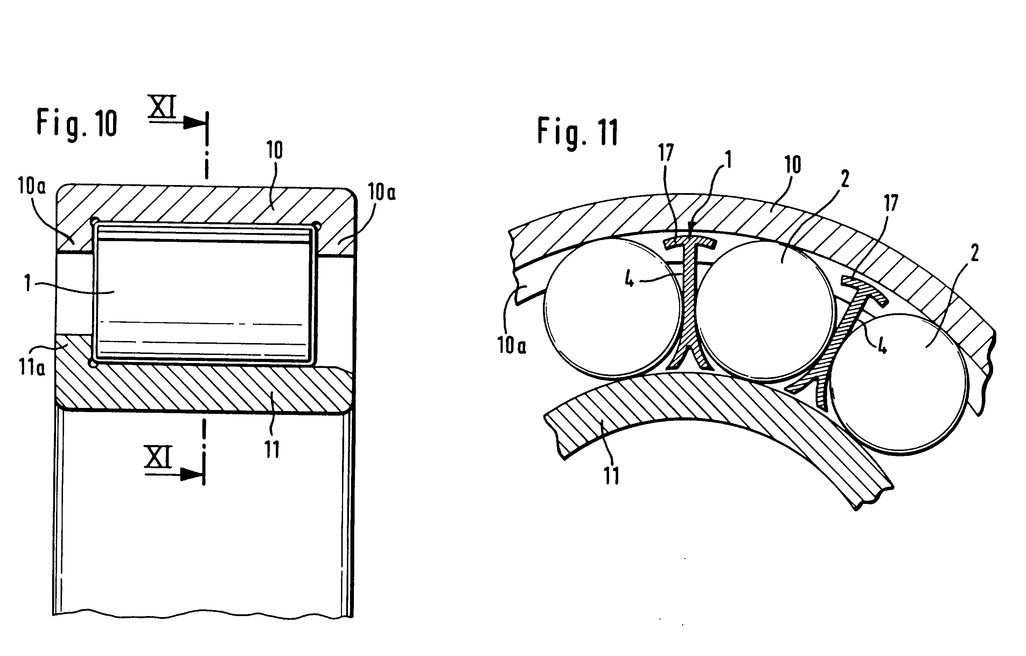

Nach den Figuren 10 und 11 zeichnet sich das Distanzstück 1 dadurch aus, daß an seiner dem Außenring 10 zugewandten Seite ein Gleitschuh 17 angeordnet ist. Dieser Gleitschuh 17 ist als Ringsegmet ausgebildet und weist einen nicht näher bezeichneten Krümmungsradius auf, der wesentlich kleiner als der Radius der Laufbahn des Außenringes 10 ist. Dadurch wird zwischen Lauffläche des Außenringes 10 und Anlagefläche des Gleitschuhes 17 ein die Schmierung begünstigender keilförmiger Spalt gebildet. Außerdem wird durch diese Ausbildung des Gleitschuhes 17 eine linienförmige Berührung zwischen diesem und der Lauffläche des Außenringes erzielt.

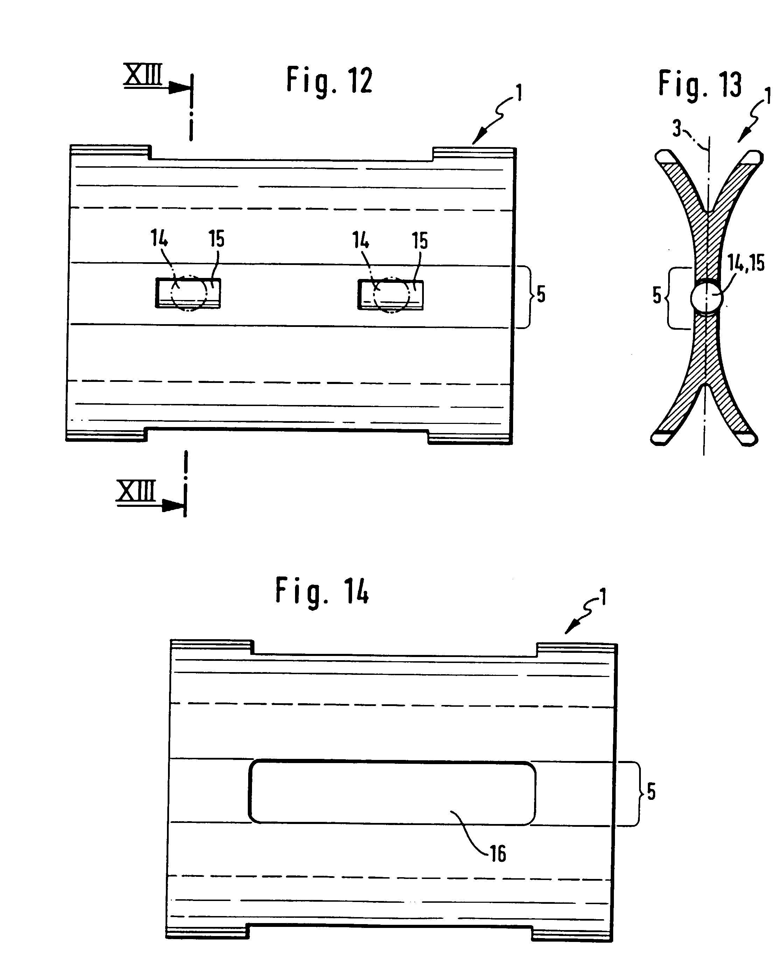

Das in Figur 12 gezeigte Distanzstück 1 ist im Teil 5 der Kontaktflächen 4 mit nicht näher bezeichneten Aussparungen zur Aufnahme von Kugeln 14 oder Zylinderrollen 15 versehen. Diese Aussparungen sind entlang der Mittellinie des Distanzstückes 1 vom Rand und voneinander beabstandet angeordnet. Zweckmäßigerweise ist jedes Distanzstück 1 mit zwei Kugeln 14 bzw. zwei Zylinderrollen 15 zur gleichmäßigen Anlage der Wälzkörper 2 des Wälzlagers versehen.

Wie aus Figur 13 erkennbar, ist der Durchmesser der Kugeln 14 bzw. der Zylinderrollen 15 geringfügig größer als die Dicke des Bereiches 5 des Distanzstückes 1, so daß die eingeschnappten Kugeln 14 bzw. Zylinderrollen 15 beidseitig von benachbart anliegenden, nicht dargestellten Wälzkörpern 2 berührt werden. Bei Bewegung des Wälzlagers weisen Wälzkörper 2 und Kugeln 14 bzw. Zylinderrolen 15 an ihren Berührungsstellen einen gleichen Drehsinn auf, so daß die bisherige Gleitreibung zwischen Distanzstück 1 und Wälzkörper 2 durch eine Rollreibung zwischen Kugeln 14 bzw. Zylinderrollen 15 und Wälzkörper 2 abgelöst wird.

Der konvex, konkav oder eben ausgebildete Bereich 5 des Distanzstückes 1 weist nach Figur 14 in seiner Mitte eine durchgehende Ausnehmung 16 auf. Durch diese Ausnehmung 16 beschränkt sich der Kontakt zwischen Distanzstück 1 und Wälzkörper 2 auf die hier noch an beiden Rändern vorhandene Kontaktfläche 5. Die Verlustleistung des Wälzlagers wird einerseits durch Schaffung eines größeren Schmiermittelraumes und somit einer verbesserten Schmierung und andererseits durch Verringerung der Kontaktflächen zwischen Distanzstück und Wälzkörper 2 verringert.

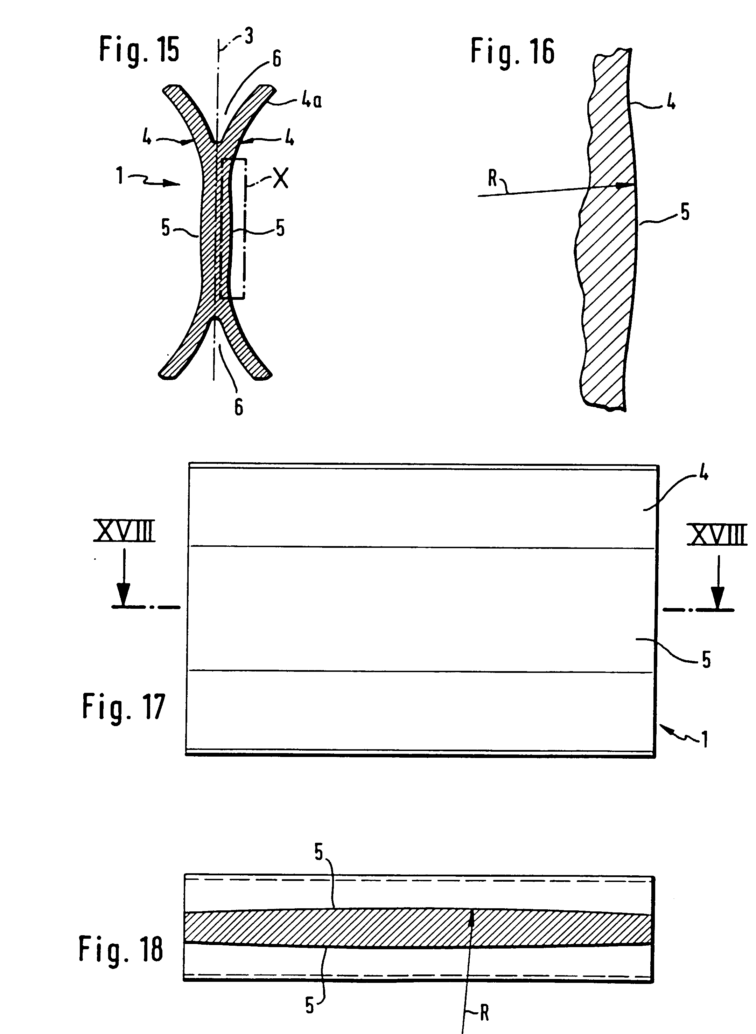

In den Figuren 15 bis 18 ist eine kalottenförmige Ausbildung des mittleren Teiles 5 der Kontaktflächen 4 dargestellt.

Wie aus Figur 15 bzw. der daraus vergrößerten Einzelheit X in Figur 16 entnommen werden kann, geht die Kontaktfläche 4 aus einem konkaven Verlauf in einen konvexen Mittelteil 5 über, bevor sie anschließend wieder konkav verläuft.

Ein derartiger Verlauf der Kontaktfläche 4 ergibt sich ebenfalls in Querrichtung des Distanzstückes 1, wie der Seitenansicht nach Figur 17 bzw. dem entlang der Linie XVIII-XVIII gelegten Schnitt entnommen werden kann.

Damit ergibt sich im Zentrum der Kontaktfläche 4 des Distanzstückes 1 eine punktförmige Berührung zwischen Distanzstück 1 und anliegenden Wälzkörpern 2, da in diesem Zentrum sowohl in Längs- als auch in Querrichtung der jeweils höchste Punkt des konvexen Mittelteiles 5 der Kontaktfläche 4 liegt.

Durch eine derartige Punktberührung werden die Reibungsverhältnisse gegenüber einer Linienberührung weiter verringert.

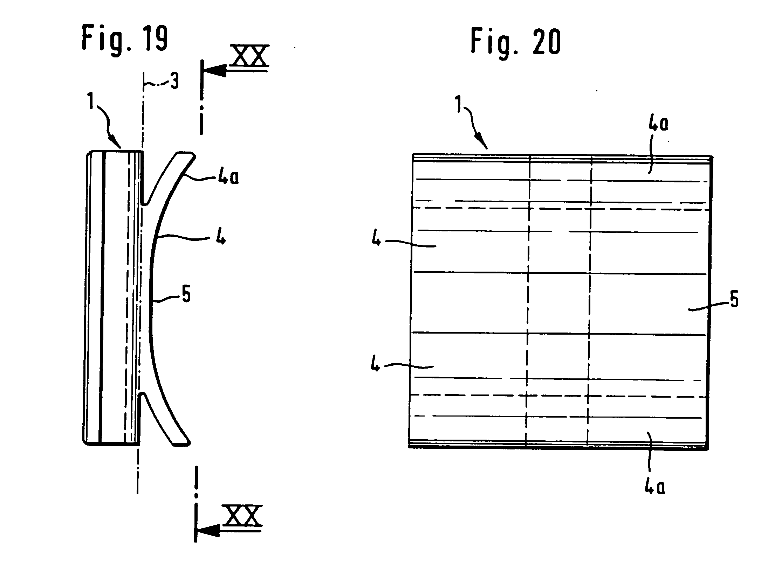

Das in den Figuren 19 und 20 dargestellte Distanzstück 1 zeichnet sich dadurch aus, daß die Kontaktflächen 4, bestehend aus den Endabschnitten 4a und dem Mittelteil 5, beidseitig der Teilungsebene 3 um einen Winkel von 90° zueinander versetzt sind.

An derartig versetzten Kontaktflächen 4 können nun beidseitig Wälzkörper 2 mit ebenfalls um 90° versetzten Drechachsen abwälzen, so daß ein derartiges Distanzstück 1 auch für Kreuzrollenlager eingesetzt werden kann.

### Bezugszeichenliste

- 1: Distanzstück
- 2: Wälzkörper
- 3: Längsmittelebene
- 4: Kontaktfläche
- 4a: Endabschnitt
- 5: ebener, konvexer bzw. konkaver Teil der Kontaktfläche
- 6: Ausnehmung
- 7, 8: Krümmungsradius
- 9: Fase
- 10: Außenring
- 10a: Bord
- 11: Innenring
- 11a: Bord
- 12: Teilkreis
- 13: Ausnehmung
- 14: Kugel
- 15: Zylinderrolle
- 16: Ausnehmung
- 17: Gleitschuh

## Patentansprüche

1. Radialwälzlager mit zwischen einem Innen- (11) und einem Außenring (10) abrollenden zylindrischen Wälzkörpern (2), wobei zwischen zwei jeweils einander benachbarten Wälzkörpern (2) einzelne Distanzstücke (1) eingefügt sind, die beidseitig ihrer Längsmittelebene (3) Kontaktflächen (4) aufweisen und bei Rotation des Radialwälzlagers mittels eines ihrer Endabschnitte (4a) an einer Laufbahn des Innen- (11) oder Außenrings (10) geführt sind, **dadurch gekennzeichnet**, daß ein Abschnitt (5) der Kontaktflächen (4), beidseitig eines Teilkreises (12) des Radialwälzlagers, eine konvexe, konkave oder ebene Kontur aufweist und daß die Kontaktflächen (4) mindestens eines Endabschnittes (4a) jedes Distanzstückes (1) konkav gekrümmt sind mit einem Krümmungsradius (7), der größer ist als der Krümmungsradius (8) der Wälzkörper (2), wobei bei konkaver Ausbildung des Abschnitts (5) dessen Krümmungsradius größer als der Krümmungsradius (7) der Kontaktflächen der Endabschnitte (4a) ist.

2. Radialwälzlage nach Anspruch 1, bei dem die Distanzstücke (1) zumindest an einem Endabschnitt (4a) einen Gleitschuh (17) aufweisen, dessen der Laufbahn zugewandte Fläche gekrümmt ausgebildet ist **dadurch gekennzeichnet**, daß der Gleitschuh (17) als Ringsegment ausgebildet ist.

3. Radialwälzlager nach Anspruch 1, **dadurch gekennzeichnet**, daß der Bereich (5) sowohl in Längs- als auch in Querrichtung konvex ausgebildet ist.

4. Radialwälzlager nach Anspruch 1, **dadurch gekennzeichnet**, daß die dem Innen-(11) und/oder Außenring (10) benachbarten Endabschnitte (4a) der Kontaktflächen (4) in ihrer Mitte mit Ausnehmungen (13) versehen sind.

5. Radialwälzlager nach Anspruch 1, **dadurch gekennzeichnet**, daß die Distanzstücke (1) eine axiale Ausdehnung aufweisen, die geringer ist als die der Laufbahnen des Innen- (11) und Außenringes (10) bzw. als die der zylindrischen Wälzkörper (2).

6. Radialwälzlager nach Anspruch 1, **dadurch gekennzeichnet**, daß die dem Innen- (11) und Außenring (10) benachbarten Endabschnitte (4a) der Kontaktflächen (4) in ihren Randbereichen mit Ausnehmungen (13) versehen sind.

7. Radialwälzlager nach Anspruch 1, **dadurch gekennzeichnet**, daß im Bereich (5) Wälzkörper (14 oder 15) eingeschnappt sind.

8. Radialwälzlager nach Anspruch 1, **dadurch gekennzeichnet**, daß der Bereich (5) in seiner Mitte mit einer Ausnehmung (16) versehen ist.

9. Radialwälzlager nach Anspruch 1, **dadurch gekennzeichnet**, daß die Distanzstücke (1) aus Kunststoff, Keramik, Aluminium- oder Kupferlegierungen bestehen.

10. Radialwälzlager nach Anspruch 1, **dadurch gekennzeichnet**, daß die Distanzstücke (1) aus Blech bestehen, wobei die den Wälzkörpern (2) und den Laufbahnen des Innen- (11) und Außenringes (10) zugewandten Flächen mit einer Kunststoffschicht versehen sind.

11. Radialwälzlager nach Anspruch 1 und 2, **dadurch gekennzeichnet**, daß die dem Innen- (11) und/oder Außenring (10) benachbarten Endabschnitte (4a) der Kontaktflächen (4) elastisch ausgebildet sind.

12. Radialwälzlager nach Anspruch 1, **dadurch gekennzeichnet**, daß die Kontaktflächen (4) beidseitig der Längsmittelebene (3) um einen Winkel versetzt zueinander angeordnet sind.

13. Radialwälzlager nach Anspruch 1, **dadurch gekennzeichnet**, daß die mit den Laufbahnen in Berührung stehenden Endabschnitten (4a) der Kontaktflächen (4) mit einer Fase (9) versehen sind.

## Claims

1. Radial rolling bearing having cylindrical rolling elements (2) which roll between an inner and an outer ring (11, 10) while individual spacers (1) are inserted between every two adjacent rolling elements (2), the spacers (1) comprising, on both sides of their central longitudinal plane (3), contact surfaces (4) while being guided during rotation of the radial rolling bearing by one of their end sections (4a) on a raceway of the inner or the outer ring (11, 10), **characterized in that** one portion (5) of the contact surfaces (4) on each side of a pitch circle (12) of the radial rolling bearing has a convex, concave or flat contour, and the contact surfaces (4) of at least one end section (4a) of each spacer (1) are concave having a radius of curvature (7) which is larger than the radius of curvature (8) of the rolling elements (2), and in the case of a concave configuration of said portion (5), the radius of curvature thereof is larger than the radius of curvature (7) of the contact surfaces of the end sections (4a).

2. Radial rolling bearing according to claim 1 in which the spacers (1) comprise on at least one end section (4a), a sliding shoe (17) having a curved surface facing the raceway, **characterized in that** the sliding shoe (17) is configured as a ring segment.

3. Radial rolling bearing according to claim 1, **characterized in that** the portion (5) has a convex configuration both in the longitudinal and in the transverse direction.

4. Radial rolling bearing according to claim 1, **characterized in that** the end sections (4a) of the contact surfaces (4) adjacent to the inner and/or outer ring (11, 10) comprise recesses (13) at their centres.

5. Radial rolling bearing according to claim 1, **characterized in that** the axial extent of the spacers (1) is smaller than that of the raceways of the inner and the outer ring (11, 10) and than that of the rolling elements (2).

6. Radial rolling bearing according to claim 1, **characterized in that** the edge regions of the end sections (4a) of the contact surfaces (4) adjacent to the inner and the outer ring (11, 10) comprise recesses (13).

7. Radial rolling bearing according to claim 1, **characterized in that** rolling elements (14 or 15) are snapped into the portions (5).

8. Radial rolling bearing according to claim 1, **characterized in that** the portion (5) comprises a recess (16) at its centre.

9. Radial rolling bearing according to claim 1, **characterized in that** the spacers (1) are made of a plastics or a ceramic material or of aluminium or copper alloys.

10. Radial rolling bearing according to claim 1, **characterized in that** the spacers (1) are made of sheet metal and their surfaces facing the rolling elements (2) and the raceways of the inner and the outer ring (11, 10) are covered with a plastics layer.

11. Radial rolling bearing according to claims 1 and 2, **characterized in that** the end sections (4a) of the contact surfaces (4) adjacent to the inner and/or outer ring (11, 10) have an elastic configuration.

12. Radial rolling bearing according to claim 1, **characterized in that** the contact surfaces (4) are arranged angularly offset to each other on the two sides of the central longitudinal plane (3).

13. Radial rolling bearing according to claim 1, **characterized in that** the end sections (4a) of the contact surfaces (4) in contact with the raceways comprise a bevel (9).

## Revendications

1. Palier à roulement radial à corps roulants cylindriques (2) qui roulent entre une bague interne (11) et une bague externe (10), il étant inséré entre deux corps roulants (2) successifs des entretoises (1) individuelles qui, des deux côtés de leur plan longitudinal central (3) sont munies de surfaces de contact (4) et qui, lors d'une rotation du palier à roulement radial, sont guidées au moyen de l'une de leurs parties d'extrémité (4a) sur une piste de roulement de la bague interne (11) ou de la bague externe (10), **caractérisé en ce qu'**une région (5) des surfaces de contact (4) a, des deux côtés d'un cercle primitif de référence (12) du palier à roulement radial, un contour convexe, concave ou plat, et que les surfaces de contact (4) d'au moins l'une des parties d'extrémité (4a) de chaque entretoise (1) sont incurvées en forme concave en ayant un rayon de courbure (7) qui est supérieur au rayon de courbure (8) des corps roulants (2), et, dans le cas où ladite région (5) a une configuration concave, son rayon de courbure est supérieur au rayon de courbure (7) des surfaces de contact des parties d'extrémité (4a).

2. Palier à roulement radial selon la revendication 1 dans lequel les entretoises (1) comprennent, au moins sur l'une de leurs parties d'extrémité (4a), un patin de glissement (17) dont la surface faisant face à la piste de roulement est incurvée, **caractérisé en ce que** le patin de glissement (17) est configuré sous la forme d'un segment d'anneau.

3. Palier à roulement radial selon la revendication 1, **caractérisé en ce que** la région (5) a un contour convexe tant en direction longitudinale qu'en direction transversale.

4. Palier à roulement radial selon la revendication 1, **caractérisé en ce que** les parties d'extrémité (4a) des surfaces de contact (4) voisines à la bague interne (11) et/ou à la bague externe (10) sont munies, à leur centre, d'évidements (13).

5. Palier à roulement radial selon la revendication 1, **caractérisé en ce que** l'étendue axiale des entretoises (1) est inférieure à celle des pistes de roulement des bagues interne (11) et externe (10) et à celle des corps roulants cylindriques (2).

6. Palier à roulement radial selon la revendication 1, **caractérisé en ce que** les parties d'extrémité (4a) des surfaces de contact (4) voisines à la bague interne (11) et à la bague externe (10) comprennent, dans leurs régions de bord, des évidements (13).

7. Palier à roulement radial selon la revendication 1, **caractérisé en ce que** des corps roulants (14 ou 15) sont encliquetés dans la région (5).

8. Palier à roulement radial selon la revendication 1, **caractérisé en ce que** la région (5) comprend, à son centre, un évidement (16).

9. Palier à roulement radial selon la revendication 1, **caractérisé en ce que** les entretoises (1) sont réalisées en une matière plastique ou céramique, ou en des alliages d'aluminium ou de cuivre.

10. Palier à roulement radial selon la revendication 1, **caractérisé en ce que** les entretoises (1) sont réalisées en tôle, et les surfaces faisant face aux corps roulants (2) et aux pistes de roulement des bagues interne (11) et externe (10) sont munies d'une couche de matière plastique.

11. Palier à roulement radial selon les revendications 1 et 2, **caractérisé en ce que** les parties d'extrémité (4a) des surfaces de contact (4) adjacentes à la bague interne (11) et/ou externe (10) ont une configuration élastique.

12. Palier à roulement radial selon la revendication 1, **caractérisé en ce que** les surfaces de contact (4) agencées des deux côtés du plan longitudinal central (3) sont angulairement décalées, l'une par rapport à l'autre.

13. Palier à roulement radial selon la revendication 1, **caractérisé en ce que** les parties d'extrémité (4a) des surfaces de contact (4) qui sont en contact avec les pistes de roulement comprennent un chanfrein (9).
